# FASCICULE DE BREVET EUROPEEN

(11) **EP 0 743 879 B1**
(45) Date de publication et mention de la délivrance du brevet: **11.07.2001**
(21) Numéro de dépôt: 95909817.9
(22) Date de dépôt: 10.02.1995
(51) Int. Cl.: B01J 31/12, C08G 18/24

(54) **UTILISATION DE DERIVES DE L'ETAIN COMME CATALYSEURS LATENTS DE POLYCONDENSATION ET PREMELANGE EN CONTENANT**
VERWENDUNG VON ZINN DERIVATEN ALS LATENTE POLYKONDENSATIONSKATALYSATOREN UND DEREN ENTHALTENDES VORGEMISCH DERSELBEN
USE OF TIN DERIVATIVES AS LATENT POLYCONDENSATION CATALYSTS AND PREMIXTURES CONTAINING SAME

(30) Priorité: 11.02.1994 FR 9401561
(43) Date de publication de la demande: 27.11.1996
(73) Titulaire: RHODIA CHIMIE, 92408 Courbevoie Cédex (FR)
(72) Inventeur: BERNARD, Jean-Marie, F-69440 Mornant (FR); FRANCES, Jean-Marc, F-69100 Villeurbanne (FR); JOUSSEAUME, Bernard, F-33400 Talence (FR); NOIRET, Nicolas, F-35250 Chevaigne (FR); PEREYRE, Michel, F-33400 Talence (FR)
(74) Mandataire: Ricalens, François
(86) Numéro de dépôt international: FR9500158
(87) Numéro de publication internationale: WO9521694

(56) Documents cités:
- EP-A- 0 370 164
- US-A- 4 517 337
- US-A- 4 549 945

## Description

La présente invention a pour objet l'utilisation de dérivés de l'étain comme catalyseurs latents de polycondensation. Elle a plus particulièrement pour objet l'utilisation de dérivés de l'étain présentant des liaisons étain-étain.

L'utilisation de sels d'étain comme catalyseurs de polycondensation est connue depuis plusieurs décennies.

Ces dérivés sont notamment utilisés pour la condensation des silicones et pour l'obtention de polyuréthanne. Ainsi, le document US 4 549 945 décrit un promoteur de reticulation à base d'organostannique présentant des liaisons Sm-Sm qui joue le rôle de photoactivateur sous ultraviolet dans la condensation d'isocyanate libre avec des polyols.

Au cours des derniers lustres une demande se fait de plus en plus sentir à savoir la mise sur le marché de prémélanges qui soient susceptibles d'une part d'être stockables pendant longtemps et d'autre part de pouvoir donner le polymère, ou le polycondensat, désiré le plus rapidement possible dans les conditions de mise en oeuvre.

Ces conditions sont en général antinomiques. C'est la raison pour laquelle très peu de catalyseurs se sont développés dans ce domaine.

C'est pourquoi un des buts de la présente invention est de trouver des dérivés de l'étain qui soient inertes ou peu actifs comme catalyseurs dans les conditions de stockage.

Un autre but de la présente invention est de trouver des composés de l'étain du type précédent qui, placés dans les conditions de mise en oeuvre des pré-mélanges, subissent une transformation pour donner des dérivés qui soient actifs dans ces conditions.

Un autre but de la présente invention est de fournir des dérivés nouveaux de l'étain qui présentent les caractéristiques ci-dessus.

Un autre but de la présente invention est de fournir des dérivés de l'étain qui soient actifs comme catalyseurs de polycondensation et qui proviennent des dérivés ci-dessus.

Un autre but de la présente invention est de fournir des pré-mélanges capables de donner des silicones et des polyuréthannes qui soient à la fois inertes dans les conditions de stockage et se condensent dans les conditions d'application.

Ces buts et d'autres qui apparaîtront par la suite sont atteints au moyen de l'utilisation de dérivés de l'étain présentant au moins une liaison étain-étain et ne présentant pas de séquence de liaisons étain-chalcogène-étain comme précurseur de catalyseur de polycondensation, lesdit catalyseurs étant formés par oxydation. De préférence le precurseur ne présente pas de séquence de liaisons étain-(métalloïde de colonne V, VI, VII)-étain. La classification périodique utilisée correspond à celle publiée dans le bulletin de la Société Chimique de France en son supplément n° 1 de Janvier 1966.
L'invention concerne aussi des compositions telles que définies selon les revendications 4 à 22, les composés tels que définis selon les revendications 23 à 31, ainsi que les utilisations définies selon les revendications 32 à 34.
En effet, de manière complètement surprenante il a été démontré au cours de l'étude qui a conduit à la présente invention que ces dérivés, lorsqu'ils étaient soumis à l'action de l'oxygène (notamment à celle de l'oxygène de l'air) conduisaient à des dérivés présentant une forte capacité catalytique pour la polycondensation, et notamment pour le démasquage, et ce bien que les composés à liaison étain-étain n'en possédassent que peu ou pas.
L'oxygène peut aussi être apporté par des agents d'oxydation porteur d'atome(s) d'oxygène, tel que halogénate, (iodate....), peroxyde, mixte ou non, de métaux (tel l'oxylithe : Na-O-O-Na), d'hydrogène et de radicaux hydrocarbonés, en général d'alcoyle et/ou d'acyle. il est toutefois préférable que l'oxygene soit apporté forme gazeuse (O₂, voire O₃) et notamment sous la forme de l'atmosphère (air).
Il est souhaitable que ces dérivés, lorsqu'ils ne sont pas cycliques, présentent au moins une liaison simple (monovalente) de type étain-chalcogène(- carbone), avantageusement étain-oxygène(-carbone).
Avantageusement les composés à liaison étain-étain présentent la formule générale (I):

R₁-Yₙ-R₄. (I)

où R₁ et R₄ qui peuvent
- être semblables ou différents et être choisis parmi l'hydrogène, avantageusement parmi les radicaux hydrocarbonés ou
- former à eux deux un radical divalent ou une unique liaison assurant la formation d'un cycle ;
où n est au moins égal à 2 ;
où les Y, semblables ou différents, représentent un chaînon stannique de structure : 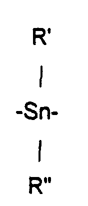 R' et R" qui peuvent être semblables ou différents sont choisis parmi l'hydrogène et avantageusement les radicaux hydrocarbonés.
Lorsque les composés sont cycliques, il est hautement préférable qu'ils soient à 5, 6 ou 7 chaînons ou un mélange de tels cycles.
Si l'on désire distinguer les chaînons les uns des autres on peut utiliser une représentation qui utilise le *j*, rang du chaînon dans la séquence, où les *j* croissent de la gauche vers la droite. 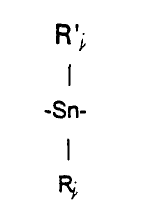 *j* prend alors toutes les valeurs entières de 1 à n, y compris les bornes :

Ainsi à titre d'exemple paradigmatique lorsque n est égal à 4 et *j* prend toutes les valeurs de 1 à 4, la formule peut se développer de la manière suivante : 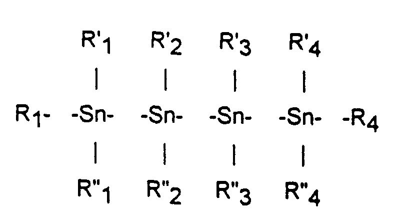
R_{*j*} et R_{*j*} qui peuvent être semblables ou différents sont choisis parmi l'hydrogène et avantageusement les radicaux hydrocarbonés.
R₁ et R₄ sont avantageusement choisis parmi les'aryles, les alcoyles, les alcoxyles, les acyloxyles, les silyles, les silyloxyles, de préférence les acyloxyles.
R₁ et R₄ peuvent également être choisis parmi ceux correspondant aux anions des acides présentant à la fois un radical hydrocarboné et une fonction acide oxygénée à caractère minéral. Les paradigmes de ces familles peuvent être les acides sulfoniques, les mono-phosphates d'alcoyle, les phosphates d'alcoyle, les phosphonates et les phosphinates éventuellement partiellement estérifiés.
n est avantageusement au plus égal à 10, de préférence compris entre 2 et 8. n est un entier à moins que l'on désire donner une valeur statistique du nombre de chaînons stannifères d'un mélange de divers dérivés selon la présente invention. Lorsque R₁ et R₄ constituent à eux deux une liaison permettant de former un dérivé cyclique, n est égal à au moins 3, et est avantageusement choisi entre 5 et 7, de préférence égal à 6 ou correspond à un mélange de dérivés à 5 et à 6 chaînons. Lorsque R' et R" sont choisis parmi les radicaux hydrocarbonés, ces radicaux sont avantageusement choisis parmi les aryles, les alcoyles, y compris les aralcoyles, les silyles, les alcoxyles, les acyloxyles, les silyloxyles.

Le choix des radicaux dépend de la propriété que l'on veut exalter. Si l'on désire limiter au maximum l'activité catalytique du composé de départ ou si l'on désire limiter au maximum les risques d'une oxydation intempestive, il est souhaitable d'avoir des composés qui présentent un encombrement stérique élevé des radicaux pour protéger l'accès à l'étain.

Ainsi, il est souhaitable qu'au moins un des radicaux R₁ et R₄, de préférence les deux présente une ramification en alpha, bêta ou gamma de l'étain.

Cette ramification peut être une ramification correspondant à un carbone tertiaire lorsqu'on désire fortement éviter toute action intempestive pendant le stockage du composé de la présente invention.

Des ramifications peuvent également être portées par les radicaux R' et R". Il peut être avantageux que un seul des deux radicaux R' et R" présente une ramification et ce pour chacune des chaînons.

Si l'on désire une réactivité plus faible par rapport à celle des dérivés à substituants alcoyles, on peut remplacer les radicaux alcoyles par des radicaux aryles. II est à noter que l'on peut augmenter l'encombrement d'un radical aryle en substituant au moins l'une des positions en ortho de la liaison carbone-étain.

Toutefois, en général, il est préférable que les substituants R' et R" ne soient pas tous des radicaux aryles avantageusement au plus la moitié.

Si en revanche on désire augmenter la réactivité du composé, il est préférable que au moins l'un des radicaux R₁ ou R₄ soit un groupe attaché par un chalcogène, de préférence un oxygène, à l'étain ; les R₁ et/ou R₄ sont ainsi avantageusement alcoxyles ou équivalents, de préférence acyloxyle(s) ou équivalents.

Afin d'éviter d'alourdir la molécule précurseur du catalyseur, il est préférable de limiter le nombre de carbones à 50 (un seul chiffre significatif), de préférence à 30 (un seul chiffre significatif) atomes de carbone par atome d'étain contenu dans la molécule.

Il est également avantageux que chacun des radicaux présente au plus 20 (un chiffre significatif), de préférence 10 (un seul chiffre significatif) atomes de carbone.
Parmi les composés donnant de très bons résultats, il convient de citer les composés où R₁ et avantageusement R₄ sont acyloxyles avantageusement ramifiés sur le carbone vicinal ou antévicinal de la fonction carbonyle et où n est égal à 2 ; les autres radicaux étant avantageusement choisis parmi les aryles et les alcoyles avec de préférence au plus 2 aryles et plus préférentiellement aucun.

Dans la présente description le terme alcoyle est pris dans son sens étymologique c'est-à-dire qu'il correspond au radical, fait d'un alcool dont on a enlevé la fonction OH.

Une autre famille particulièrement satisfaisante est constituée par les composés de formule I où R₁ et R₄ ensemble forment une liaison unique de manière que les composés de formule I soient des composés cycliques. Dans ce cas, n est avantageusement compris entre 5 et 7 (bien entendu y compris les bornes). Au cours de l'étude qui a mené à la présente invention, il a été possible, non seulement de démontrer que les composés de formule I étaient susceptibles d'engendrer in situ des composés présentant une forte activité catalytique pour la polycondensation, mais encore d'identifier certains des produits présentant une bonne activité catalytique.

Ainsi, on a pu démontrer que les composants dérivant de la formule I par oxydation, et notamment par insertion d'oxygène entre deux atomes d'étain, présentaient une forte activité catalytique, en particulier ceux de formule II

(II) R₁-(Q)ₙ-R₄.

où les radicaux ont la même valeur que dans la formule (I) ci-dessus et
où Q est un chaînon divalent de structure -Z-Y- avec Y de même définition que dans la formule (I) et où Z, soit représente un atome d'oxygène soit ne représente qu'une liaison avec le chaînon précédent ou avec R₁.
Il faut en outre remplir la condition selon laquelle Z représente au moins une fois un oxygène et lorsque n est supérieur à 2, au moins deux fois un oxygène.

Si l'on reprend la représentation utilisant le rang du chaînon *j* Q_{*j*} peut être représenté par: 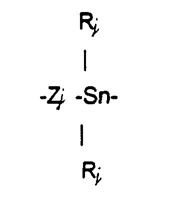 et *j* prend toute les valeurs de 1 à n avec la condition que lorsque le rang *j* correspond à 1, Z ne représente que la liaison entre l'étain de rang 1 et le radical R₁, Z pouvant être un oxygène ou une simple liaison lorsque *j* est différent de 1.

Lorsque n est supérieur à 2, ces composés ont tendance à se transformer en dérivés organoétains dont au moins un des atomes d'étain est deux fois liés à un atome d'oxygène (par exemple : ^{-O}>Sn<^{O-} ; >Sn=O ; ...les liaisons laissées ouvertes avec l'étain étant des liaisons avec les radicaux R₅ et R₆).
Ces dits organoétains deux fois liés à l'oxygène sont réputés à la fois amorphes et insolubles. Ils donnent in situ des dérivés du type dialcoxy- ou diamino-diorganostannane qui se révèlent des catalyseurs de grande qualité.

Les radicaux organiques (R₅ et R₆) correspondant notamment aux oxydes de diorganoétain, sont issus (souvent inchangés) des radicaux déjà présents dans la molécule initiale et le plus souvent des radicaux R' et R" et de préférence à des radicaux hydrocarbonés relié à l'étain par un atome de carbone.

Ainsi, selon la présente invention, il a été trouvé une nouvelle catégorie de catalyseur de polycondensation dont la formule répond à celle des dialcoxydiorganostannanes dans lesquels les deux "organo" correspondent aux R' et R". Il est préférable dans ce cas, comme dans les autres cas, que le nombre de carbones des R' et R" soit supérieur à 1, de préférence supérieur à 2.

Ainsi que cela a été mentionné plus haut, un autre but de la présente invention est de fournir des compositions, ou prémélanges, qui soient stables au stockage et se polycondensent aisément dans les conditions d'utilisation.

Ce but est atteint au moyen d'une composition comportant au moins un composé polycondensable et au moins un composé de formule :

R₁-Yₙ-R₄. (I)

Dans cette formule R₁ et R₄ qui peuvent être semblables ou différents sont des dérivés choisis parmi l'hydrogène, les radicaux hydrocarbonés ou à eux deux former un radical divalent ou une unique liaison assurant la formation d'un cycle ;
n est au moins égal à 2 ;
les Y, semblables ou différents, représentent un chaînon stannique de structure 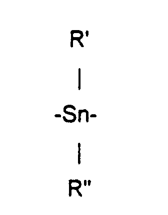 R' et R" qui peuvent être semblables ou différents sont choisis parmi l'hydrogène et les radicaux hydrocarbonés.

Parmi les composés polycondensables, il convient de citer les alcools, avantageusement les diols, les plus souvent des polyols, des amines, avantageusement des diamines, les plus souvent des polyamines. Les formulations à base d'alcools di- ou polyvalents, connues de l'homme de métier en matière de polyuréthannes sont parfaitement adaptées.

En ce qui concerne les (poly)amines, il convient de faire attention à leur emploi. En effet d'une part les amines sont souvent très réactives "per se" et d'autre part elle peuvent catalyser la libération des isocyanates masqués. Il convient alors de ne choisir que des amines qui ne catalysent pas la libération des isocyanates masqués.

Comme composition susceptible d'utiliser les catalyseurs latents selon l'invention, on peut également citer :
- les huiles silicone et leurs précurseurs.
- Les compositions silicones connues pour être susceptibles de réticuler par des réactions de condensation susceptibles d'être catalysées par un catalyseur à l'étain. Parmi ces compositions silicones on peut notamment citer les compositions à un seul ou à deux emballages susceptibles de réticuler en un élastomère, les compositions de revêtements conditionnées en masse, en solvant ou en émulsion aqueuse susceptibles de réticuler en une pellicule élastomère de revêtement.

De manière plus détaillées on peut citer tout les polysiloxanes susceptibles de mettre en jeu les condensations de type SiH/SiOH et SiOH/SiOR
Ainsi, en ce qui concerne les condensations SiH/SiOH, la présente invention vise des composions comportant, outre au moins un catalyseur latent selon la présent invention, au moins un des constituants suivant :
- au moins un dérivé à fonctions SiH ;
- au moins un dérivé à fonctions SiOH ;
- optionnellement au moins un solvant desdits dérivé(s) à fonctions SiH et/ou dérivé(s) à fonctions SiOH ;
- optionnellement de l'eau, le cas échéant sous forme d'une phase aqueuse continue ;
- optionnellement une quantité efficace d'au moins un agent inhibiteur de formation de gel à la température de stockage de ladite composition.

Elle vise surtout comme dérivés à fonctions SiH, les organohydrogénopolysiloxanes ayant, par molécule, au moins 2, avantageusement au moins 3 atomes d'hydrogène directement liés aux atomes de silicium et répondant à la formule générale moyenne

Rₓ H_{y} Si O_{(4-x-y)/2}

formule dans laquelle
. le symbole R représente des radicaux identiques ou différents alcoyles ou aryles contenant de 1 à 8 atomes de carbone ou vinyles, au moins 80 % en nombre desdits radicaux étant des radicaux méthyles ;
. le symbole x représente un nombre quelconque allant de 1 à 1,99 ;
. le symbole y représente un nombre quelconque allant de 0,1 à 1 ;
. la somme x+y allant de 1,7 à 2,6 ;

Le dérivé à fonctions SiH peut être linéaire, ramifié ou cyclique ; pour des raisons économiques, sa viscosité est de préférence inférieure à 100 mPa.s.; les radicaux organiques identiques ou différents sont de préférence méthyle, éthyle et/ou phényle. Lorsque celui-ci est linéaire, les atomes d'hydrogène des fonctions SiH sont liés directement aux atomes de silicium situés en bout(s) de chaîne et/ou dans la chaîne.
A titre d'exemple de dérivé à fonctions SiH linéaire, on peut citer les polyméthylhydrogénosiloxanes à extrémités triméthylsiloxy, les polydiméthylpolyméthylhydrogénosiloxanes à extrémités triméthylsiloxy et/ou hydrogénodiméthylsiloxy.
Parmi les polymères cycliques peuvent être cités ceux répondant aux formules suivantes :
[OSi(CH₃)H]₄ ; [OSi(CH₃)H]₅ ; [OSi(CH₃)H]₃ ; [OSi(CH₃)H]₆
{[OSi(CH₃)H]₃[OSi(CH=CH₂)CH₃]} ; [OSi(C₂H₅)H]₃

A titre d'exemples concrets de polymères ramifiés peuvent être cités :
CH₃Si[OSi(CH₃)₂H]₃ ; Si[OSi(CH₃)₂]₄ ; C₃H₇Si[OSi(CH₃)2H)₃
HSi[OSi(CH₃)₃][OSi(CH₃)₂H]₂ ; Si[OSi(CH₃)(C₂H₅)H][OSi(CH₃)₂H]₃ ainsi que ceux constitués de motifs SiO₂ et H(CH₃)₂SiO_{0,5} de rapport CH₃/Si de 1 à 1,5.

Elle vise surtout comme dérivé(s) à fonctions SiOH, les (hydroxy)organopolysiloxanes présentant au moins deux fonctions SiOH, en général α,ω-bis(hydroxy)organopolysiloxanes et les résines organopolysiloxanes contenant de 0,02 à 0,2 fonction silanol pour 100 g. de résine, éventuellement en mélange avec des gommes α,ω-bis(hydroxy)organopolysiloxanes, les groupes organiques identiques ou différents étant des radicaux alcoyles ou vinyles, contenant de 1 à 8 atomes de carbone ou aryles d'au plus 10 atomes de carbone. Le dérivé à fonctions SiOH peut présenter une viscosité pouvant atteindre 200 000 mPa.s. ; pour des raisons économiques, on choisit un constituant dont la viscosité est généralement de l'ordre de 20 à 10 000 mPa.s..
Les groupes organiques identiques ou différents généralement présents dans les huiles ou gommes di- ou poly-hydroxylées en général en α,ω, sont les radicaux méthyle, éthyle, phényle, vinyle, trifluoropropyle. De préférence au moins 80 % en nombre desdits groupes organiques sont des groupes méthyles liés directement aux atomes de silicium.
Les résines à fonctions silanol présentent avantageusement par molécule au moins un des motifs R'₃SiO_{0,5} (motif M) et R'₂SiO (motif D), en association avec au moins un des motifs R'SiO_{1,5} (motif T) et SiO₂ (motif Q). Les radicaux R' généralement présents sont méthyle, éthyle, isopropyle, tertiobutyle et n-héxyle. Comme exemples de résines on peut citer les résines MQ, MDQ, TD et MDT.
Parmi les solvants éventuels des dérivé(s) à fonctions SiOH et/ou des dérivé(s) à fonctions SiH permettant de régler la viscosité de la composition , on peut citer les solvants classiques des polymères silicones, comme par exemple les solvants de type aromatique (xylène, toluène ...), aliphatique saturé (hexane, heptane, white-spirit, tetrahydrofuranne, diéthylether ...), les solvants chlorés (chlorure de méthylène, perchloroéthylène ...)

A titre indicatif on peut mentionner que le rapport nombre de fonctions SiH du dérivé à fonctions SiH/ nombre de fonctions SiOH du dérivé à fonctions SiOH étant de l'ordre de 1/1 à 100/1, de préférence de l'ordre de 10/1 à 30/1 ;

En ce qui concerne les condensations SiOH/SiX, en général SiOH/SiOR, la présente invention vise des composions comportant, outre au moins un catalyseur latent selon la présente invention, au moins un des constituants suivant :
- au moins un dérivé à fonctions SiOH ;
- au moins un dérivé à fonctions SiX où X est groupe hydrolysable en général de type OR ;
- optionnellement au moins un solvant desdits dérivé(s) à fonctions SiH et/ou dérivé(s) à fonctions SiOH ;
- optionnellement de l'eau, le cas échéant sous forme d'une phase aqueuse continue ;
- optionnellement une quantité efficace d'au moins un agent inhibiteur de formation de gel à la température de stockage de ladite composition.

Les dérivés ci-dessus ont déjà été décrits à l'exception des dérivés de type SiX.
Avantageusement ces dérivés présentent la formule R Si X₃ ou Si X₄, où R a la définition donnée ci-après et X représente un groupe hydrolysable.
Parmi les radicaux hydrocarbonés R on peut citer les radicaux :
. méthyle, éthyle, propyle, trifluoro-3,3,3 propyle, cyclohexyle, cyanoéthyle ...
. vinyle, allyle, butényle ...
. phényle, chlorophényle ...

Le dérivé à fonctions SiX présente au moins un groupe hydrolysable tel que :
. acyloxy de formule -O-CO R'
. alcoxy de formule -O-R'
. amino de formule -NR¹R²
. amido de formule -NR¹COR²
. alcényloxy de formule -O-CR¹=CHR²
. aminoxy de formule -O-NR¹R²
. cétiminoxy de formule -O-N=CR¹R² ou 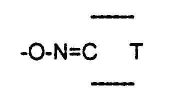 où R' représente un radical alcoyle ou aryle ayant de 1 à 15 atomes de carbone, R¹ et R², identiques ou différents représentent des radicaux alkyle ou aryle contenant de 1 à 8 atomes de carbone et T un radical alkylène contenant de 4 à 8 atomes de carbone. Parmi les radicaux R', R¹ et R², on peut citer tout particulièrement les radicaux méthyle, éthyle, cyclohexyle, phényle ...
   Parmi les radicaux T on peut citer tout particulièrement ceux de formule -(CH₂)₄- ;-(CH₂)₅- ; -(CH₂)₆- ...

Les dérivés à fonctions SiX préférentiellement mis en oeuvre sont les alcoxysilanes et les cétiminoxysilanes.
A titre d'exemple d'alcoxysilanes, on peut citer ceux de formule
CH₃Si(OCH₃)₃ CH₃Si(OC₂H₅)₃ C₂H₅Si(OCH₃)₃
CH₂=CHSi(OCH₃)₃ CH₂=CHSi(OCH₂-CH₂-OCH₃)₃
C₆H₅Si(OCH₃)₃ CH₃Si(OCH₃)₂OCH(CH₃)-CH₂-OCH₃
Si(OCH₃)₄ Si(OC₂H₅)₄ Si(OC₃H₇)₄

A titre d'exemple de cétiminoxysilanes, on peut citer ceux de formule CH₃Si[ON=C(CH₃)₂]₃ CH₃Si[ON=C(CH₃)C₂H₅]₃
CH₂=CHSi[ON=C(CH₃)C₂H₅]₃ C₆H₅Si[ON=C(CH₃)₂]₃
CH₃Si[ON=C(C₂H₅)(CH₂)₃CH₃]₃ (CH₃)₂C=NOSi[ON=C(CH₃)C₂H₅]₃
CH₃Si[ON=C(CH₃)CH(C₂H₅)(CH₂)₃CH₃]₃

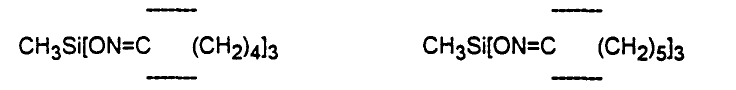

Les dérivés à fonctions SiX acyloxysilanes sont également intéressants.
A titre d'exemple d'acyloxysilanes, on peut citer ceux de formule
CH₃Si(OCOCH₃)₃ C₂H₅Si(OCOCH₃)₃ CH₂=CHSi(OCOCH₃)₃
C₆H₅Si(OCOCH₃)₃ CH₃Si[OCOCH(C₂H₅)-(CH₂)₃-CH₃] CF₃CH₂CH₂Si(OCOC₆H₅)₃
CH₃Si(OCOCH₃)₂(OCOH(C₂H₅)-(CH₂)₃-CH₃
CH₃COOSi[OCOCH(C₂H₅)-(CH₂)₃-CH₃]₃

II convient en outre de mentionner l'intérêt des compositions comportant un catalyseur latent selon l'invention, pour la fabrication de polyuréthanne(s) notamment pour peinture. Ainsi, parmi les composés polycondensables, et notamment réticulables, il convient de citer particulièrement les isocyanates, avantageusement les diisocyanates, de préférence les polyisocyanates, qu'ils soient masqués ou non.
Il convient de faire une mention particulière des dérivés porteurs d'au moins une fonction isocyanate dont l'azote est lié à un carbone aliphatique (c'est-à-dire d'hybridation sp³) et avantageusement porteur d'un, de préférence deux, atome(s) d'hydrogène, qui sont souvent plus difficilement réticulables et/ou polycondensables que celles dont l'azote est lié à un carbone à caractère aromatique. Cette distinction peut être importante dans le cas des isocyanates masqués.
On peut citer parmi les différents isocyanates ceux qui sont totalement ou seulement partiellement masqués, on peut également utiliser des isocyanates qui sont constitués par des mélanges. Les constituants de ces mélanges peuvent être isocyanates masqués ou libres. Parmi les isocyanates présentant un intérêt particulier, on peut citer à titre paradigmatique :
- les précondensats de monomères de diisocyanates avec un polyol de préférence comportant au moins trois fonctions alcool ;.
- les oligomères comportant des cycles isocyanurates (trimères et/ou pentamères) ;
- les dimères ;
- et les dérivés à fonction biuret.

Les groupes masquants sont des groupes bien connus des hommes de métier et qui dérivent de composés à hydrogène mobile, groupes déplaçables par les alcools à une température avantageusement comprise entre 80 et 200°C, de préférence entre 100 (deux chiffres significatifs) et 150°C. Ces valeurs s'entendent comme une réponse au test à l'octanol -1, explicité ultérieurement, c'est-à-dire correspondent à la valeur la plus basse des températures permettant d'obtenir au moins 90 % d'absorption de l'octanol
(c'est-à-dire libération à au moins 90 % de l'agent masquant).
La composition selon la présente invention peut comporter avantageusement d'une part un (poly)isocyanate, de préférence masqué, et d'autre part des formulations, du type (poly)ol ou (poly)amine telles que mentionnées ci dessus, formulations susceptibles de se condenser avec les isocyanates ci-dessus.

Il convient en outre de mentionner le fait qu'il est possible d'accélérer l'oxydation des composés de formule I en les soumettant à un rayonnement actinique dans le visible ou l'ultraviolet. Cette propriété est particulièrement intéressante car elle donne un moyen d'accélérer l'activation des catalyseurs latents si le besoin s'en fait sentir.

Il convient également de mentionner qu'il est préférable de stocker les compositions selon la présente invention à l'abri de la lumière.

Il convient également de souligner que les composés de formule I selon la présente invention peuvent être mis en contact avec des phases contenant de l'eau à condition que cette dernière soit, elle aussi, bien désoxygénée sans qu'il y ait dégradation des composés selon la présente invention.
Ainsi on peut utiliser les catalyseurs de la présente invention dans toutes sortes de dispersions et de suspensions, voire solutions ayant un caractère aqueux c'est-à-dire contenant une phase continue présentant au moins 10 % d'eau en masse.
Ainsi, selon une mise en oeuvre avantageuse de la présente invention, les composés catalytiques latents selon la présente invention peuvent être mis en suspension dans une phase aqueuse en utilisant de préférence des solutions bien désoxygénées par tout moyen connu de l'homme de métier et notamment par dégazage au moyen d'un gaz inerte ou réducteur ou leur mélange.
Il convient également de souligner que certains tensioactifs utilisés peuvent ralentir la migration de l'oxygène nécessaire à l'activation des catalyseurs latents.

Ceci constitue un avantage particulier lorsqu'on désire utiliser comme composé condensable des composés mis en suspension en phase aqueuse pour éviter l'utilisation de solvants. Ainsi, selon la présente invention, les composés de formule I peuvent être présents dans les compositions sous forme de suspension dans une phase aqueuse.

La présente invention a également pour objet un procédé de polycondensation dans lequel on utilise une composition, ou prémélange, selon la présente invention que l'on soumet à l'action de l'oxygène éventuellement en présence d'un rayonnement visible ou ultraviolet.

La présente invention a également pour objet des compositions contenant à la fois des isocyanates au moins partiellement masqués en mélange avec les composés selon la présente invention.

Ces mélanges peuvent contenir les composés selon la présente invention sous forme de solutions, de suspensions, d'émulsions ou de poudres.

L'agent de masquage utilisé peut être soit des agents de masquage donnant naissance à des séquences du type urée ( > N - CO - N < ), soit à des séquences du type carbamate (> N - CO - O - ), voire (> N - CO - S -). L'effet catalytique le plus net, dans l'état actuel des connaissances de la demanderesse; est lié à la libération des séquences de type urée et notamment des agents de masquage à base de pyrazole substitué ou non.
Les agents de masquage usuels en la matière donnent en général de bons résultats avec les catalyseurs latents selon la présente invention.

On peut citer notamment les catalyseurs masqués avec des dérivés du type pyrazole, oxazole, succinimide et d'une manière générale ceux dont l'hydrogène mobile est porté par un azote ; on peut également citer les agents de masquage de type oxime et d'une manière générale ceux dont l'hydrogène mobile est porté par un oxygène.

### TEST A L'OCTANOL

### définition du test à l'octanol

Dans un tube, type SCHOTT, avec agitation magnétique, on charge environ 5 mmol en équivalent NCO masqué protégé à évaluer.
On ajoute 2,5 à 3 ml de dichloro-1,2 benzène (solvant) et l'équivalent d'octanol-1 (5 mmol, soit 0,61 g).
On chauffe 6 h à la température considérée, de façon à débloquer et ainsi rendre réactives les fonctions isocyanates.

On évalue le pourcentage de fonction isocyanate masquée condensée avec l'octanol-1.
On considère que la libération d'un isocyanate est complète lorsque quatre-vingt dix (nonante) % de l'octanol est absorbé.

Les exemples non limitatifs suivants illustrent l'invention.

### TECHNIQUES D'ANALYSES

### Résonance magnétique nucléaire (RMN)

### RMN ¹H

Les spectres de RMN du proton ont été enregistrés avec un spectrographe PERKIN-ELMER de type R24-B ou un spectrographe BRUKER WP-60. Pour ces appareils, les échantillons sont préparés en solution dans du tétrachlorure de carbone à environ 30 % en masse. Certains spectres ont été réalisés sur un appareil BRUKER AC 250, fonctionnant à 250 MHz. Dans ce cas, le chloroforme-*d* a été utilisé comme solvant.

Pour tous les spectres, les déplacements sont donnés en ppm avec le tétraméthylsilane comme référence interne et les couplages en hertz.

### RMN ¹³C

Les spectres de RMN du carbone 13 ont été enregistrés sur un appareil BRUKER AC 250 fonctionnant à 62,9 MHz. Le solvant utilisé est le chloroforme-*d*. Pour tous les spectres, les déplacements sont donnés en ppm avec le tétraméthylsilane comme référence et les couplages en Hertz.

### RMN ¹¹⁹Sn

Les spectres de RMN de l'étain ont été enregistrés sur un appareil BRUKER AC 200 fonctionnant à 74,5 MHz. Le solvant utilisé est un mélange benzène/benzène-*d*_{*6*} à 30 % en C₆D₆. Pour tous les spectres, les déplacements sont donnés en ppm avec le tétraméthylstannane comme référence et les couplages en Hertz.

### Spectrométrie de masse

Le couplage HPLC/Spectroscopie de masse a été réalisé sur un appareil VG AutoSpec Q. Pour cette technique dite LSIMS (Liquid Secondary Ion Mass Spectroscopy), l'ionisation est obtenue par FAB (Fast Atom Bombarding) dynamique (ou à flux continu). La source est un canon à césium et la matrice employée est du glycérol à raison de 2 %.

### Chromatographie

### En phase vapeur

Les analyses par chromatographie en phase vapeur ont été réalisées sur un appareil VARIAN 3000. La colonne utilisée est une colonne capillaire de 30 mètres de longueur pour un diamètre de 320*µ*m, chargée en diméthylpolysiloxane (0,25*µ*m).

### En phase liquide

Les analyses par chromatographie en phase liquide ont été effectuées sur un appareil VARIAN 9010 muni d'un détecteur à barrette de diodes WATERS 991.
Différentes colonnes ont été utilisées :
- colonne Lichrosorb C₈ 10*µ* (250 x 4,6 mm)
- colonne Ultrabase C₈ 5*µ* (150 X 4,6 mm)
- colonne Nucléosil C₁₈ 10*µ* (250 x 4,6 mm)

### ULTRASONS

Les essais ont été réalisés à l'aide d'un sonicateur SONICS & MATERIALS équipé d'une sonde plongeante.

### Exemple 1

Effet catalytique des bi (acyloxy) 1,3 tetraalcoyldistannoxanes pour la polycondensation SiH/SiOH. Dans ce tableau t-C₉H19CO₂ correspond à un mélange d'isomères ayant un carbone tertiaire en alpha de la fonction carbonyle et qui correspond au mélange connu sous le nom d'acide versatique. (pour le mode opératoire, se reporter à l'exemple V1).

La lettre C dans les tableaux indique qu'il s'agit d'un exemple comparatif qui n'appartient pas à l'invention.

| **Catalyseur** | **Temps de gel (min.)** | **Catalyseur** | **Temps de gel (min.)** |
|---|---|---|---|
| (n-C₄H₉)₂Sn(O₂CCH₃)₂ (C) | 8 | (n-C₈H₁₇)₂Sn(O₂CCH₃)₂ (C) | 9 |
| [(n-C₄H₉)₂Sn(O₂CCH₃)]₂O | 12 | [(n-C₈H₁₇)₂Sn(O₂CCH₃)]₂O | 15 |
| (n-C₄H₉)₂Sn(O₂CC₁₁H₂₃)₂ | 12 | (n-C₈H₁₇)₂Sn(O₂CC₁₁H₂₃)₂ | 15 |
| (C) | 9 | (C) | 8 |
| [(n- | 35 | [(n-C₈H₁₇)₂Sn(O₂CC₁₁H₂₃)]₂O | 30 |
| C₄H₉)₂Sn(O₂CC₁₁H₂₃)]₂O | 20 | (n-C₈H₁₇)₂Sn(O₂CCH(C₂H₅)C₄H₉)₂ | 15 |
| (n-C₄H₉)₂Sn(O₂CCH(C₂H₅))₂ (C) | 45 | (C) | 40 |
| (n-[C₄H₉)₂Sn(O₂CCH(C₂H₅))C₄H₉)₂]₂O | 24 | [(n-C₈H₁₇)₂Sn(O₂CCH(C₂H₅))C₄H₉)₂]₂O | 17 |
| (n-C₄H₉)₂Sn(O₂Ct-C₉H₁₉)₂^{(a)} (C) | | (n-C₈H₁₇)₂Sn(O₂Ct-C₉H₁₉)₂ | |
| [(n-C₄H₉)₂Sn(O₂Ct-C₉H₁₉)₂]₂O | | (C) | |
| | | [(n-C₈H₁₇)₂Sn(O₂Ct-C₉H₁₉)₂]₂O | |

| | | | |
|---|---|---|---|
| (a) mélange d'isomère avec un carbone tertiaire en alpha du carboxyle. | | | |

### Exemple 2

Activité catalytique des distannanes et des distanoxannes pour les couples SiOH/SiOR et SiH/SiOH.(pour le mode opératoire, se reporter aux exemples V-2 et V-3).

| **Catalyseur** | **SiOH/SiOR Temps de gel/heure** | **SiH/SiOH Temps de gel/minute** |
|---|---|---|
| Bu₂Sn(O₂CCH₃)₂ (C) | 1,5 | 8 |
| [Bu₂Sn(O₂CCH₃)]₂O | 1,2 | 12 |
| [Bu₂Sn(O₂CCH₃)]₂ (N₂) | 45 | 43 |
| [Bu₂Sn(O₂CCH₃)]₂ (air) | 4,5 | 23 |
| Bu₂Sn(O₂CC₁₁H₂₃)₂ (C) | 3,2 | 12 |
| [Bu₂Sn(O₂CC₁₁H₂₃)]₂O | 2,7 | 9 |
| [Bu₂Sn(O₂CC₁₁H₂₃)]₂ (N₂) | > 120 | 36 |
| [Bu₂Sn(O₂CC₁₁H₂₃)]₂ (air) | 8,5 | 26 |

### Exemple 3

Catalyse de polyisocyanate pour donner des polyuréthannes (pour le mode opératoire, se reporter à l'exemple V-4).

| **Catalyseur** | **Temps de gel** |
|---|---|
| Bu₂Sn(O₂CCH(C₂H₅)₄H₉)₂ | 14 |
| [Bu₂Sn(O₂CCH(C₂H₅)C₄H₉)]₂O | 20 |
| [Bu₂Sn(O₂CCH(C₂H₅)C₄H₉)]₂ (N₂) | 150 |
| [Bu₂Sn(O₂CCH(C₂H₅)C₄H₉)]₂ (air) | 30 |
| sans catalyseur (blanc) | 500 |

### Exemple 4

Synthèse des cyclopoly(dialcoylstannanes) par décomposition de dialcoylstannane(s) catalysé par le palladium : cas du dibutylstannane.

| **Solvent** | **T(°C)** | **t(h)** | **Rdt (%)** | **Sn**_{**5**} **/ Sn**_{**6**} |
|---|---|---|---|---|
| Pentane | 15 | 12 | 95 | 90/10 |
| Silicone | 20 | 6 | 80 | 70/30 |
| THF | - 50 15 50 | 2 0.5 0.2 | 95 95 90 | (a) 80/20 70/30 |

### Exemple 5

Préparation de polydialcoylpolystannanes à partir de R₂SnCl₂.

| **R**_{**2**}**SnCl**_{**2**} | **Metal** | **Activation** | **T (°C)** | **t (h)** | **Solvent** | **Rdt (%)**^{**(a)**} |
|---|---|---|---|---|---|---|
| Bu₂SnCl₂ | Mg | B | -5 | 2 | THF | 83 (40/60) |
| Bu₂SnCl₂ | Mg | A | 60 | 1 | THF | 90 (45/55) |
| Bu₂SnCl₂ | Mg | C | 10 | 0.2 | THF | 75 (70/30) |
| Bu₂SnCl₂ | Li | B | 60 | 1 | THF | 71 (45/55) |
| Bu₂SnCl₂ | Mg | B | 40 | 1 | Et₂O | 50 (40/60) |
| Bu₂SnCl₂ | Na | - | 110 | 3 | Tol. | 50 (40/60) |
| Oct₂SnCl₂ | Mg | A | 60 | 1 | THF | 86 (30/70) |

### Exemple 6 : Cyclopoly(dialcoylstannane)

Stabilité en émulsion des composés à liaison étain-étain. L'émulsion réalisée dans une fiole à vie sous argon sous forte agitation on additionne goutte à goutte le composé stannique à un alcool polyvinylique à 10 % d'eau (vendu sous la marque déposée Rhodoviol) dégazée au préalable. Après un quart d'heure on dilue le milieu avec de l'eau dégazée, après une demi-heure d'agitation l'émulsion stannique est transférée dans un tube de "Schlenck" sous argon pour stockage. Après dix jours on reprend le spectre de la préparation conservée sous azote. Dans aucun on n'a pu constater de modification par rapport au spectre initial.

Mode opératoire pour fabriquer les produits testés dans les exemples précédents et mode opératoire pour les différentes mesures effectuées.

### BI(ACYLOXY)DIALCOYLSTANNANES

Les bi(acyloxy)dialcoylstannanes sont obtenus par réaction entre un oxodialcoylstannane R₂SnO et un oxyde carboxylique R'CO₂H⁽¹⁵⁾ : dans un ballon de 250 ml, on introduit 0,05 mole d'oxodialcoylstannane en suspension dans du cyclohexane et 0,1 mole d'acide carboxylique. Le ballon muni d'un montage de type Dean & Stark, est porté à 100°C. L'eau formée pendant la réaction est éliminée au fur et à mesure par distillation azéotropique. Le chauffage est maintenu tant que l'azéotrope distille.
BI(ACETYLOXY)DIBUTYLSTANNANE, Bu₂Sn(OCOCH₃)₂
   Eb₁₀=144°C Rdt=85 %
   RMN¹H: 0,9-1,65(18H,m) ; 2,0(6H,s)
   RMN¹¹⁹Sn: -156,3
BI(LAUROYLOXY)DIBUTYLSTANNANE, Bu₂Sn(OCOC₁₁H₂₃)₂
   RMN¹H: 0,9-1,60(60H,m);2,2(4H,t)
   RMN¹¹⁹Sn: -152,5
BI(ETHYLHEXANOYLOXY)DIBUTYLSTANNANE
   Bu₂Sn(OCOCH(Et)(Bu)₂
   F=54°C
   RMN¹H: 0,9-2,0(46H,m);2,0-2,5(4H,t)
   RMN¹¹⁹Sn: -154,7
BI(VERSATYLOXY)DIBUTYLSTANNANE, Bu₂Sn(OCOC₉H₁₉)₂
   Eb7=155°C Rdt=85 %
   RMN¹H: 0,8-2,0(56H,m)
   RMN¹¹⁹Sn: -162,6
BI(ACETYLOXY)DIOCTYLSTANNANE, Oct₂Sn(OCOCH₃)₂
   RMN¹H: 0,9-17,0(34H,m);2,0(6H,t)
   RMN¹¹⁹Sn: -156,8
BI(LAUROYLOXY)DIOCTYLSTANNANE, Oct₂Sn(OCOC₁₁H₂₃)₂
   F=25°C
   RMN¹H: 0,9-2,4(80H,m)
   RMN¹¹⁹Sn: -153,1
BI-(2ETHYLHEXANOYLOXY)DIOCTYLSTANNANE
   Oct₂Sn(OCOCH(Et)(Bu))₂
   F=13-15°C
   RMN¹H: 0,9-2,5(64H,m)
   RMN¹¹⁹Sn: -157,9
BI(VERSATYLOXY)DIOCTYLSTANNANE, Oct₂Sn(OCOC₉H₁₉)₂
   RMN¹H: 0,9-2,5(72H,m)
   RMN¹¹⁹Sn: -151,5

### 1,2-BI(ACYLOXY)TETRAALCOYLDISTANNANES

Les distannanes sont obtenus par décomposition des hydrures mixtes R₂Sn(OCOR')H ou par échange à partir du 1,2-dichlorotétrabutyidistannane avec des sels de sodium ou de potassium.
1 PAR DECOMPOSITION
Dans un tube de Schlenck sous azote, on mélange en quantité stoechiométrique un dialcoylstannane et un bi(acyloxy)dialcoylstannane. Un dégagement d'hydrogène est observé immédiatement. La réaction peut être accélérée par chauffage (60°C) ou par addition de chlorure de bi(triphénylphosphine) palladium (II) (0,1 %) comme catalyseur. Les distannanes sont obtenus avec une pureté supérieure à 95 %.
2 PAR ECHANGE
Dans un tube de Schlenck sous azote, on mélange en quantité stoechiométrique du dibutylstannane et du dichlorodibutylstannane dans du pentane dégazé. Après quelques minutes, on ajoute du chlorure de bi(triphénylphosphine) palladium (II) (0,1 %) comme catalyseur. Lorsque le dégagement d'hydrogène est terminé, on additionne un large excès d'un sel d'acide R'CO₂M (M = Na, K) et on laisse 30 min. sous agitation. Après filtration des sels précipités, le distannane est obtenu avec une pureté supérieure à 99 %.
3 ANALYSES
1,2-bi(acétyloxy)tétrabutyldistannane, [Bu₂SnOCOCH₃]₂
RMN¹H: 0,9-1,65(36H,m); 1,9(6H,s)
RMN¹¹⁹Sn(CDCl₃): -126,8 (¹J(SnSn)=11272Hz)
1,2-bi(lauroyloxy)tétrabutyldistannane [Bu₂SnOCOC₁₁H₂₃]₂
RMN¹H: 0,8-1,8(78H,m); 1,9-2,3(4H,s)
RMN¹¹⁹Sn: -135,8 (¹J(SnSn)=11662Hz)
1,2-bi(2-éthylhexanoyloxy)tétrabutyldistannane
[Bu₂SnOCOCH(Et)(Bu)]₂
F=24°C
RMN¹H: 0,8-1,8(72H,m); 1,9-2,3(2H,s)
RMN¹¹⁹Sn: -140,0 (¹J(SnSn)=10857Hz)
1,2-bi(versatyloxy)tétrabutyldistannane
[Bu₂SnOCOC tC₉H₁₉]₂
RMN¹¹⁹Sn: -142,1 (¹J(SnSn)=11863Hz)
1,2-bilauroyloxy)tétraoctyldistannane,
[Oct₂SnOCOOC₁₁H₂₃]₂
RMN¹¹⁹Sn: -140,0 (¹J(SnSn)=11662Hz)
1,2-dichlorotétrabutyldistannane, [Bu₂SnCl]₂
RMN¹¹⁹Sn: +110,1 (¹J(SnSn)=2465Hz)
1,3-BI(ACYLOXY)TETRAALCOYLDISTANNOXANES, [R₂Sn(OCOR')]₂O
Les distannoxanes sont obtenus par réaction entre un oxodialcoylstannane et un acide carboxylique dans le toluène (2h, 110°C). Ces composés sont en fait sous forme de dimères différenciant les étains.
Les atomes d'étain ne sont donc pas équivalents et on observe donc 2 signaux différents en RMN¹¹⁹Sn. De plus, en général on note la présence d'un signal très minoritaire correspondant au monomère (2 étains équivalents).
1,2-BI(ACETYLOXY)TETRABUTYLDISTANNOXANE
   F=57°C
   RMN¹H: 0,9-1,7(78H,m); 1,9(6H,s)
   RMN¹¹⁹Sn: -132,3 (monomère); -215,3, -226,6(dimère)
   ²J(SnSn)=112Hz
1,2-BI(LAUROYLOXY)TETRABUTYLDISTANNOXANE
   RMN¹H: 0,8-1,7(78H,m); 1,9-2,3(4H,s)
   RMN¹¹⁹Sn: -134,9; -217,4; -226,6
   ²J(SnSn)=113Hz
1,2 -BI(2-ETHYLHEXANOYLOXY)TETRABUTYLDISTANNOXANE
   F=130°C
   RMN¹H: 0,7-2,4(66H,m)
   RMN¹¹⁹Sn: -152,0; -211,1; -223,0
   1,2-bi(versatoyloxy)tetrabutyldistannoxane
   RMN¹H: 0,8-1,8(74H,m)
   RMN119Sn: -143,5; -222,5; -228,5
1,2-BI(ACETYLOXY)TETRAOCTYLDISTANNOXANE
   RMN¹H: 0,7-1,7(68H,m); 1,9(6H,s)
1,2-BI(LAUROYLOXY)TETRAOCTYLDISTANNOXANE
   F=38°C
   RMN1 H: 0,7-2,2(114H,m)
1,2-BI(2-ETHYLHEXANOYLOXY)TETRAOCTYLDISTANNOXANE
   F=52°C
   RMN¹H: 0,7-2,2(98H,m)
   RMN¹¹⁹Sn: -202,2; -211,0
   1,2-bi(versatoyloxy)tetraoctyldistannoxane
   RMN¹H: 0,7-1,7(106H,m)

**4 - POLY(DIALCOYLSTANNANES)**
Pour la préparation de ces composés très sensibles à l'oxygène, toutes les opérations décrites ci-dessous sont réalisées sous azote et tous les solvants utilisés sont au préalable dégazés.
4.1 -1 PAR DECOMPOSITION CATALYSEE
   Dans un tube de Schlenck contenant 10 ml d'un solvant dégazé (pentane ou THF), on introduit 4,7 g de dibutylstannane Puis on ajoute une spatulée (10 mg) de chlorure de bi(triphénylphosphine) palladium II (<0,1 %). A l'abri de la lumière, la décomposition est poursuivie jusqu'à totale disparition du dégagement d'hydrogène.
4.2-2 PAR REDUCTION D'UN DICHLORODIALKYLSTANNANE
4.2-1 Procédé A : activation au 1,2-dibromoéthane
   Dans un grignard, on introduit 10 g de magnésium dans 20 ml du solvant désiré, puis 0,5 ml de 1,2-dibromoéthane: il se produit alors un dégagement gazeux et un échauffement du milieu. Lorsque le dégagement cesse, on introduit 40 mmoles de dichlorodialcoylstannane en solution dans le solvant, additionné de 1 ml de 1,2-dibromoéthane. Après addition, le mélange est porté au reflux pendant 1 h.
4.2-2 Procédé B : ultrasons
   Dans un réacteur prévu à cet effet, on introduit le métal et le solvant de réaction. Les ultrasons sont mis en marche pendant 30 min. et le dichlorodialcoylstannane est ajouté.
   Après addition, les ultrasons sont remis en marche jusqu'à la fin de la réaction.
4.2-3 Procédé C : activation mécanique
   Dans un grignard flammé et sous azote on introduit 10 g de magnésium sans solvant sous agitation magnétique à l'aide d'un barreau aimanté. Au bout de 48 h, le ballon est recouvert d'un miroir d'étain et le métal est très finement divisé. Le solvant est ensuite additionné, puis le dichlorodialcoylstannane (réaction très exothermique).
4.2-4 Procédure générale de purification des poly(dialkystannanes)
   Le milieu réactionnel est additionné d'éther de pétrole (100 ml) dégazé, filtré sous azote et transféré dans un tube de Schlenck ; 50 ml d'eau dégazée sont ensuites additionnés, puis la phase organique est séparée, séchée sur MgSO₄ et les solvants sont évaporés. On recueille les poly(dialkystannanes) sous forme d'huiles visqueuses jaune-ocre.

**5 - TEST DES CATALYSEURS EN MELANGES SIMPLIFIES**
5.1 CONDENSATION SiH/SiOH
Les mélanges sont effectués à partir de :
- 23 g d'huile silicone polydiméthylsiloxane alpha, omega-dihydroxylée ;
- 1 g de polydiméthylsiloxanne à 1,5 % en poids de motif SiH ;
- 0,712 milimole de catalyseur à base d'étain.

Les mélanges sont homogénéisés et portés à la température indiquée le temps de gel correspond au temps au bout duquel il n'est plus possible de tirer un fil à la surface du mélange.
**5.2 CONDENSATION SiOH/Si(OPr)**_{**4**}
A 60 g d'huile alpha, omega-dihydroxylée à 0,3 % d'eau est ajouté le système réticulant composé de 0,84 g de silicate de propyle et 1,14mmole de composé stannylé (ou équivalent). L'ensemble est mélangé à la spatule durant une minute. L'instant t=0 correspond au moment où le mélange est terminé. Pour les distannanes, l'huile est dégazée au préalable.
5.3 CONDENSATION SiOH/Si40
1,24 mmole de composé stannique est mélangé à 4 g de "Si40". Un prélèvement de 0,36 g de ce pré mélange est ajouté à 20 g d'huile alpha, omega-dihydroxylée. L'ensemble est mélangé et testé.
5.4 POLYURETHANNES
Dans une fiole à vide sont introduits :
- 5,26 g de polyéthylène glycol de masse 1000
- 0,80 g de butane-1,4-diol.

A ce mélange dégazé on ajoute 1ml d'une solution de 0,15 g de composé stannylé dans 50 ml d'éther anhydre. Le solvant est évaporé sous vide, puis 3,94 g de 3-isocyanatométhyl-3,5,5-triméthylcyclohexylisocyanate sont additionnés. Le mélange final est versé dans un moule cylindrique de 2 cm de diamètre sur 0,5 cm de hauteur.
5.5 UTILISATION COMME CATALYSEUR DE DEMASQUAGE DE POLY-ISOCYANATES MASQUES AVEC DU DIMETHYLPYRAZOLE
On utilise des trimères (c'est-à-dire des hexaméthylène diisocyanates trimérisés pour donner des cycle isocyanurique) masqués par du diméthyl-3,5 pyrazole.
Un lot de polyisocyanates masqués de poids moléculaire 792,98 à 0,258 mole %/g de groupement isocyanate masqué est soumis aux modes opératoires suivants :
- dilution de 80,01 g du lot par 8,24 de solvesso ;
- prise d'essai de 2 g de solution (soit 4,7 mmol de fonction isocyanate masqué) ;
- adjonction de 0,61 g d'octanol-1 (4,7 mmol) ;
- adjonction de 50 mg de catalyseur ;
- réaction en présence de l'oxygène de l'air.

On mélange les réactifs ci-dessus à température ambiante, on amène à 80° C en 15 mn, puis on maintient à 80° C pendant 6 heures.
Les résultats sont rassemblés dans le tableau suivant :

| CATALYSEUR TESTE | TAUX DE TRANSFORMATION DE L'OCTANOL | OBSERVATIONS SUR LA SOLUTION APRES REACTION |
|---|---|---|
| Cyclo poly(dialcoylstannanes) ex.4 : Sn₅/Sn₆ = 70/30 | 35 % | Limpide jaune très clair + louche |
| Bi(lauroyloxy)tétrabutyldistan -nane [Bu₂SnOCOC₁₁H₂₃]₂ | 50 % | Limpide, peu ou pas coloré |
| Bi(acétyloxy)tétrabutyldistannane | 49 % | |
| Oxyde de dibutylétain | 13 % | |
| Sans | 0 % | |

Les résultats obtenus sont tout à fait exceptionnels, les catalyseurs selon l'invention étant parmi les meilleurs de ceux traités, malgré une masse moléculaire relativement élevée. A noter également la bonne activité malgré son insolubilité de l'oxyde de dibutylétain qui est un sous-produit des produits selon l'invention par oxydation.
A titre indicatif, il convient de mentionner que la température de libération de ce type d'agent bloquant est de l'ordre de 140 °C lorsqu'ils sont liés à des isocyanates portés par des carbones d'hybridation sp³.
5.6 UTILISATION COMME CATALYSEUR DE DEMASQUAGE DE POLYISOCYANATES MASQUES AU MOYEN DE METHYLETHYLCETOXIME ("MEKO")
On utilise des trimères (c'est-à-dire des hexaméthylène diisocyanates trimérisés pour donner des cycle isocyanurique) masqués par de la méthyléthylcétoxime ("MEKO")

Un aliquot de polyisocyanates masqués avec de la méthyléthylcétoxime est dilué par 10 % en masse de solvesso et introduit dans un réacteur avec la même quantité molaire d'octanol-1 et 50 mg du catalyseur.

Les réactifs ci-dessus sont mélangés à température ambiante et portés progressivement à 80°C en 15 mn, la température est maintenue à 80°C pendant 6 heures en présence de l'oxygène de l'air.

Les résultats sont rassemblées dans le tableau suivant:

| **CATALYSEUR TESTE** | **TAUX DE TRANSFORMATION DE L'OCTANOL** | **OBSERVATIONS SUR LA SOLUTION APRES REACTION** |
|---|---|---|
| Cyclo poly(dialcoylstannanes) ex.4 : Sn₅/Sn₆ = 70/30 | 4 % | Limpide jaune très clair + louche |
| Bi(lauroyloxy)tétrabutyldistan -nane [Bu₂SnOCOC₁₁H₂₃]₂ | 3 % | Limpide, peu ou pas coloré |
| Bi(acétyloxy)tétrabutyldistannane | 1 % | |
| Oxyde de dibutylétain | 9 % | Insoluble |
| Sans | 0 % | |

Les résultats ci-dessus sont significatifs car les conditions régnant dans le réacteur ne sont pas très favorables à l'oxydation des précurseurs de catalyseur. A noter l'activité assez importante d'un des produits d'oxydation desdits catalyseurs latents. Pour mieux apprécier l'effet remarquable des catalyseurs latents sur la présente invention, il convient de souligner que la température de libération de tels isocyanates masqués avec des oximes est de l'ordre de 160 °C. Que. des essais à 80°C donnent une certaine libération, démontrent une activité remarquable des catalyseurs selon la présente invention.

## Revendications

1. Utilisation de dérivés de l'étain présentant au moins une liaison étain-étain et ne présentant pas de séquence de liaisons étain-chalcogène-étain, comme precurseurs de catalyseur de polycondensation, lesdit catalyseur étant formés par oxydation.

2. Utilisation selon la revendication 1, caractérisée par le fait que les dérivés de l'étain présentant au moins une liaison étain-étain répond à la formule (I)
R₁-Yₙ-R₄. (I)
où R₁ et R₄ qui peuvent
. être semblables ou différents et être choisis parmi l'hydrogène, ou avantageusement parmi les radicaux hydrocarbonés ;
ou
. former à eux deux un radical divalent ou une unique liaison assurant la formation d'un cycle ;
où n est au moins égal à 2 ;
où les Y, semblables ou différents, représentent un chaînon stannique de structure : 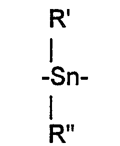 R' et R" qui peuvent être semblables ou différents sont choisis parmi l'hydrogène et avantageusement les radicaux hydrocarbonés.

3. Utilisation selon les revendications 1 et 2, caractérisée par le fait que ladite oxydation est réalisée au sein d'une composition comportant au moins un composé polycondensable.

4. Composition, caractérisée par le fait qu'elle comporte pour addition successive ou simultanée :
· au moins un dérivé de l'étain présentant au moins une liaison étain-étain et ne présentant pas de séquence de liaisons étain-chalcogène-étain ;
et
· au moins un composé polycondensable choisi parmi les suivants :
- un isocyanate au moins partiellement masqué, avantageusement un diisocyanates, de préférence un polyisocyanates ;
- au moins un dérivé à fonctions SiOH ;
- au moins un dérivé à fonctions SiX où X est groupe hydrolysable en général de type OR.

5. Composition selon la revendication 4, caractérisée par le fait qu'elle comporte :
· un (poly)isocyanate, au moins partiellement masqué ;
· un composé choisi parmi les alcools, avantageusement les diols, de préférence
les polyols.

6. Composition selon les revendications 4 et 5, caractérisée par le fait qu'elle comporte en outre :
· un agent d'oxydation porteur d'atome(s) d'oxygène avantageusement choisi parmi
ceux du groupe constitué par les halogénates, les peroxydes, les gaz contenant de l'oxygène.

7. Composition utile, notamment pour la réticulation des peintures, caractérisée par le fait qu'elle comporte pour addition successive ou simultanée :
· au moins un composé polycondensable choisi parmi :
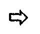 les alcools, avantageusement les diols, de préférence les polyols ; ou
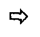 parmi les amines, avantageusement les diamines, de préférence les polyamines ; ou
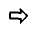 parmi isocyanates, avantageusement les diisocyanates, de préférence les polyisocyanates, masqués ou non ; ou
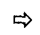 parmi leurs mélanges ;
· un dérivé de l'étain présentant au moins une liaison étain-étain et ne présentant pas de séquence de liaisons étain-chalcogène-étain ;
et
· un agent d'oxydation porteur d'atome(s) d'oxygène, avantageusement choisi parmi ceux du groupe constitué par les halogénates, les peroxydes, les gaz contenant de l'oxygène ;
à condition que lorsque les dérivés de l'étain ne sont pas cycliques, ils présentent au moins une liaison simple de type étain chalcogène et que lorsque ces composés sont cycliques, ils présentent 5, 6 ou 7 chaînons.

8. Composition selon l'une des revendications 4 à 7, caractérisée par le fait que ledit dérivé de l'étain répond à la formule I :
R₁-Yₙ-R₄. (I)
où R₁ et R₄ qui peuvent
- être semblables ou différents et être choisis parmi l'hydrogène, ou avantageusement parmi les radicaux hydrocarbonés
- ou
- former à eux deux un radical divalent ou une unique liaison assurant la formation d'un cycle ;
où n est au moins égal à 2 ;
où les Y, semblables ou différents, représentent un chaînon stannique de structure : 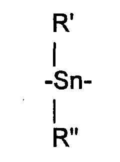 R' et R", qui peuvent être semblables ou différents, sont choisis parmi l'hydrogène et avantageusement parmi les radicaux hydrocarbonés.

9. Composition selon la revendication 8, caractérisée par le fait que parmi les deux radicaux R₁ et R₄ au moins un radical présente un chalcogène (avantageusement un oxygène) et que ce chalcogène porte la liaison liant ledit radical à l'étain.

10. Composition selon l'une des revendications 8 et 9, caractérisée par le fait que ledit au moins un des radicaux R₁ et R₄ présente une ramification en alpha, bêta ou gamma dudit chalcogène portant la liaison liant ledit radical à l'étain.

11. Composition selon l'une des revendications 8 à 10, caractérisée par le fait que le radical R₁ est aryle ou alcoyle, y compris aralcoyle, et par le fait que le nombre de ses carbones est au plus égal à 20, de préférence à 10.

12. Composition selon l'une des revendications 8 à 11, caractérisée par le fait que le radical R₄ est aryle ou alcoyle, y compris aralcoyle, et par le fait que le nombre de ses carbones est au plus égal à 20, de préférence à 10.

13. Composition selon l'une des revendications 8 à 12, caractérisée par le fait que le radical R₁ présente une ramification en alpha, bêta ou gamma de la liaison liant ledit radical R₁ à l'étain.

14. Composition selon l'une des revendications 8 à 13, caractérisée par le fait que le radical R₄ présente une ramification en alpha, bêta ou gamma de la liaison liant ledit radical R₄ à l'étain.

15. Composition selon les revendications 14 et 13, caractérisée par le fait que ladite ramification en alpha, bêta ou gamma correspond à un radical tertiaire.

16. Composition selon l'une des revendications 8 à 15, caractérisée par le fait qu'au moins un des radicaux R₁' présente un nombre de carbone au plus égal à 20, de préférence à 10.

17. Composition selon l'une des revendications 8 à 16, caractérisée par le fait qu'au moins un des radicaux Rᵢ" présente un nombre de carbone au plus égal à 20, de préférence à 10.

18. Composition selon l'une des revendications 4 à 17, caractérisée par le fait que le dit dérivé de l'étain présentant au moins une liaison étain-étain et ne présentant pas de séquence de liaisons étain-chalcogène-étain, est présent dans une phase aqueuse de préférence sous la forme d'une émulsion ou d'une dispersion dans une phase aqueuse.

19. Composition selon l'une des revendications 4 à 1⁸, caractérisée par le fait que le polyisocyanate comporte au moins un dimère, un cycle isocyanurique, une fonction allophanate et/ou au moins une fonction biuret.

20. Composition selon l'une des revendications 8 à ¹⁹ , caractérisée par le fait qu'elle comporte un (poly)isocyanate masqué.

21. Composition selon l'une des revendications 4 à 2⁰, caractérisée par le fait qu'elle comporte un (poly)isocyanate masqué au moyen d'un pyrazole.

22. Composition selon l'une des revendications 4 à 2₁, caractérisée par le fait que le polyisocyanate est un polyisocyanate masqué par une oxime, avantageusement la méthyléthycétoxime.

23. Composé utile comme catalyseur latent de polycondensation, répond à la formule I :
R₁-Yₙ-R₄. (I)
où R₁ et R₄ sont
. semblables ou différents et choisis parmi l'hydrogène, ou avantageusement parmi les radicaux hydrocarbonés, l'un au moins des radicaux R₁ ou R₄ étant un groupe attaché par un chalcogène, de préférence un oxygène, à l'étain ;
ou
. former à eux deux un radical divalent ou une unique liaison assurant la formation d'un cycle à 5, 6 ou 7 chaînons ;
où n est au moins égal à 2 ;
où les Y, semblables ou différents, représentent un chaînon stannique de structure : 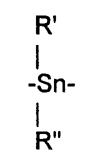 R' et R" qui peuvent être semblables ou différents sont choisis parmi l'hydrogène et avantageusement les radicaux hydrocarbonés et par le fait que ledit au moins un des radicaux R₁ et R₄ présente une ramification en alpha, bêta ou gamma dudit chalcogène portant la liaison liant ledit radical à l'étain.

24. Composé selon la revendication 23, caractérisée par le fait qu'au moins un des radicaux Rᵢ' présente un nombre de carbone au plus égal à 20, de préférence à 10.

25. Composé selon l'une des revendications 23 à 24, caractérisée par le fait que le radical R₁ est aryle ou alcoyle, y compris aralcoyle, et par le fait que le nombre de ses carbones est au plus égal à 20, de préférence à 10.

26. Composé selon l'une des revendications 23 à 24, caractérisée par le fait que le radical R₄ est aryle ou alcoyle, y compris aralcoyle, et par le fait que le nombre de ses carbones est au plus égal à 20, de préférence à 10.

27. Composé selon l'une des revendications 23 à 26, caractérisée par le fait que le radical R₁ présente une ramification en alpha, bêta ou gamma de la liaison liant ledit radical R₁ à l'étain.

28. Composé selon l'une des revendications 23 à 27, caractérisée par le fait que le radical R₄ présente une ramification en alpha, bêta ou gamma de la liaison liant ledit radical R₄ à l'étain.

29. Composé selon les revendications 23, 24, 27 ou 28, caractérisée par le fait que ladite ramification en alpha, bêta ou gamma correspond à un radical tertiaire.

30. Composé selon les revendications 23 à 24, caractérisée par le fait que les R₁ et/ou R₄ sont alcoxyles.

31. Composé selon les revendications 23 à 25, caractérisée par le fait que les R₁ et/ou R₄ sont acyloxyle(s).

32. Utilisation comme catalyseur de polycondensation de composés répondant à la formule (II) :
(II) R₁-(Q)ₙ-R₄.
où les radicaux ont la même valeur que dans la formule (I) ci-dessus ;
où n est supérieur ou égal à 2 ; et
où Q est un radical divalent de structure -Z-Y-, avec Y de même définition que dans la formule (I) et où Z, soit représente un atome d'oxygène, soit ne représente qu'une liaison avec le chaînon précédent ou avec R₁ avec la condition qu'au moins un des Z soit oxygène.

33. Utilisation comme catalyseur de polycondensation d'isocyanate(s) et/ou de libération de isocyanate(s) masqué(s) de composés répondant à la formule (II) :
R₅-Sn(R₆)=O
où R₅ et R₆ sont choisis parmi les mêmes radicaux que R', R" et R₁ et R₄.

34. Utilisation selon la revendication 34 ou 35 dans laquelle les isocyanates masqués sont masqués par des agents de masquages donnant naissance à des sequences de type urée.

## Claims

1. Use of tin derivatives which have at least one tin-tin bond and which have no tin-chalcogen-tin bonding sequences, as polycondensation catalyst precursors, the said catalysts being formed by oxidation.

2. Use according to Claim 1, characterized in that the tin derivatives having at least one tin-tin bond correspond to formula (I):
R₁-Yₙ-R₄ (I)
in which R₁ and R₄ which may
• be similar or different and be chosen from hydrogen and advantageously, from hydrocarbon-based radicals;
or
• together form a divalent radical or a single bond ensuring the formation of a ring;
in which n is at least equal to 2;
in which the groups Y, which may be identical or different, represent a tin-membered chain unit of structure: 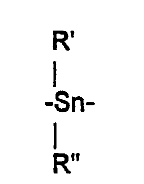 R' and R", which may be identical or different, are chosen from hydrogen and, advantageously, hydrocarbon-based radicals.

3. Use according to either of Claims 1 and 2, characterized in that the said oxidation is carried out in a composition comprising at least one polycondensable compound.

4. Composition, characterized in that it comprises, for successive or simultaneous addition:
• at least one tin derivative having at least one tin-tin bond and having no tin-chalcogen-tin bonding sequences; and
• at least one polycondensable compound chosen from the following:
- an isocyanate which is at least partially masked, advantageously a diisocyanate, preferably a polyisocyanate;
- at least one derivative containing SiOH functions;
- at least one derivative containing SiX functions where X is a hydrolysable group generally of type OR.

5. Composition according to Claim 4, characterized in that it comprises:
• a (poly)isocyanate, which is at least partially masked;
• a compound chosen from alcohols, advantageously diols, preferably polyols.

6. Composition according to Claims 4 and 5 characterized in that it additionally comprises:
• an oxidation agent bearing oxygen atom(s) advantageously chosen from those of the group consisting of halogenates, peroxides and oxygen-containing gases.

7. Composition which is useful, in particular, for curing paints, characterized in that it comprises, for successive or simultaneous addition:
• at least one polycondensable compound chosen from:
- alcohols, advantageously diols, preferably polyols; or
- from amines, advantageously diamines, preferably polyamines, or
- from isocyanates, advantageously diisocyanates, preferably polyisocyanates, which may or may not be masked; or
- from mixtures thereof;
• a tin derivative having at least one tin-tin bond and having no tin-chalcogen-tin bonding sequences; and
• an oxidization agent bearing oxygen atom(s), advantageously chosen from those of the group consisting of halogenates, peroxides and gases containing oxygen; on condition that when the tin derivatives are not cyclic, they have at least one single bond of tin-chalcogen type and when these compounds are cyclic, they are 5-, 6- or 7-membered.

8. Composition according to one of Claims 4 to 7, characterized in that the said tin derivative corresponds to formula I:
R₁-Yₙ-R₄ (I)
in which R₁ and R₄, which may
- be identical or different and be chosen from hydrogen and, advantageously, from hydrocarbon-based radicals,
- or
- together form a divalent radical or a single bond ensuring the formation of a ring;
in which n is at least equal to 2;
in which the groups Y, which may be identical or different, represent a tin-membered chain unit of structure: 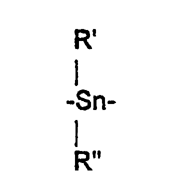 R' and R", which may be identical or different, are chosen from hydrogen and, advantageously, from hydrocarbon-based radicals.

9. Composition according to Claim 8, characterized in that among the two radicals R₁ and R₄, at least one radical has a chalcogen (advantageously an oxygen) and that this chalcogen bears the bond linking the said radical to tin.

10. Composition according to either of Claims 8 and 9, characterized in that the said at least one of the radicals R₁ and R₄ has branching alpha, beta or gamma to the said chalcogen bearing the bond linking the said radical to tin.

11. Composition according to one of Claims 8 to 10, characterized in that the radical R₁ is aryl or alkyl, including aralkyl, and in that its carbon number is not more than 20, preferably not more than 10.

12. Composition according to one of Claims 8 to 11, characterized in that the radical R₄ is aryl or alkyl, including aralkyl, and in that its carbon number is not more than 20, preferably not more than 10.

13. Composition according to one of Claims 8 to 12, characterized in that the radical R₁ has branching alpha, beta or gamma to the bond linking the said radical R₁ to tin.

14. Composition according to one of Claims 8 to 13, characterized in that the radical R₄ has branching alpha, beta or gamma to the bond linking the said radical R₄ to tin.

15. Composition according to Claims 13 and 14, characterized in that the said alpha, beta or gamma branching corresponds to a tertiary radical.

16. Composition according to one of Claims 8 to 15, characterized in that at least one of the radicals Rᵢ' has a carbon number of not more than 20, preferably of not more than 10.

17. Composition according to one of Claims 8 to 16, characterized in that at least one of the radicals Rᵢ" has a carbon number of not more than 20, preferably of not more than 10.

18. Composition according to one of Claims 4 to 17, characterized in that the said tin derivative which has at least one tin-tin bond and which has no tin-chalcogen-tin bonding sequences is present in an aqueous phase, preferably in the form of an emulsion or a dispersion in an aqueous phase.

19. Composition according to one of Claims 4 to 18, characterized in that the polyisocyanate comprises at least one dimer, an isocyanuric ring, an allophanate function and/or at least one biuret function.

20. Composition according to one of Claims 8 to 19, characterized in that it comprises a masked (poly)isocyanate.

21. Composition according to one of Claims 4 to 20, characterized in that it comprises a (poly)isocyanate masked with a pyrazole.

22. Composition according to one of Claims 4 to 21, characterized in that the polyisocyanate is a polyisocyanate masked with an oxime, advantageously methyl ethy ketoxime.

23. Compound which is useful as a latent polycondensation catalyst, corresponding to formula I:
R₁-Yₙ-R₄ (I)
in which R₁ and R₄ are
• identical or different and chosen from hydrogen and, advantageously, from hydrocarbon-based radicals, at least one of the radicals R₁ or R₄ being a group attached via a chalcogen, preferably an oxygen, to tin;
or
• to form together a divalent radical or a single bond ensuring the formation of a 5-, 6- or 7-membered ring;
in which n is at least equal to 2;
in which the groups Y, which may be identical or different, represent a tin-membered chain unit of structure: 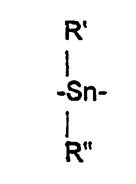 R' and R", which may be identical or different, are chosen from hydrogen and, advantageously, from hydrocarbon-based radicals and in that the said at least one of the radicals R₁ and R₄ has branching alpha, beta or gamma to the said chalcogen bearing the bond linking the said radical to tin.

24. Compound according to Claim 23, characterized in that at least one of the radicals Rᵢ' has a carbon number of not more than 20, preferably of not more than 10.

25. Compound according to either of Claims 23 and 24, characterized in that the radical R₁ is aryl or alkyl, including aralkyl, and in that its carbon number is not more than 20, preferably not more than 10.

26. Compound according to either of Claims 23 and 24, characterized in that the radical R₄ is aryl or alkyl, including aralkyl, and in that its carbon number is not more than 20, preferably not more than 10.

27. Compound according to one of Claims 23 to 26, characterized in that the radical R₁ has branching alpha, beta or gamma to the bond linking the said radical R₁ to tin.

28. Compound according to one of Claims 23 to 27, characterized in that the radical R₄ branching alpha, beta or gamma to the bond linking the said radical R₄ to tin.

29. Compound according to Claims 23, 24, 27 or 28, characterized in that the said alpha, beta or gamma branching corresponds to a tertiary radical.

30. Compound according to Claims 23 and 24, characterized in that the radicals R₁ and/or R₄ are alkoxys.

31. Compound according to Claims 23 to 25, characterized in that the radicals R₁ and/or R₄ are acyloxy(s).

32. Use, as a polycondensation catalyst, of compounds corresponding to formula (II):
(II) R₁-(Q)ₙ-R₄
in which the radicals have the same value as in formula (I) above;
in which n is greater than or equal to 2; and
in which Q is a divalent radical of structure -Z-Y-, with Y of the same definition as in formula (I) and in which Z either represents an oxygen atom or simply represents a bond with the preceding chain unit or with R₁, with the condition that at least one of the groups Z is oxygen.

33. Use, as a catalyst for the polycondensation of isocyanate(s) and/or for the release of masked iso-cyanate(s), of compounds corresponding to formula (II):
R₅-Sn (R₆) =O
in which R₅ and R₆ are chosen from the same radicals as R', R" and R₁ and R₄.

34. Use according to Claim 34 or 35, in which the masked isocyanates are masked with masking agents which give rise to sequences of urea type.

## Patentansprüche

1. Verwendung von Zinnverbindungen, die mindestens eine Zinn-Zinn-Bindung und keine Sequenz von Zinn-Chalkogen-Zinn-Bindungen haben, als Ausgangsstoffe für Katalysatoren zur Polykondensation, wobei die genannten Katalysatoren durch Oxidation gebildet werden.

2. Verwendung nach Anspruch 1, dadurch gekennzeichnet, daß die Zinnverbindungen, die mindestens eine Zinn-Zinn-Bindung haben, der Formel (I) entsprechen:
R₁-Yₙ-R₄. (I)
wobei R₁ und R₄
• ähnlich oder verschieden und aus Wasserstoff oder vorteilhafterweise aus den Kohlenwasserstoffresten gewählt sein können; oder
• aus beiden einen zweiwertigen Rest oder eine einzige Bindung bilden können, die einen Ring bildet;
wobei n mindestens gleich 2 ist;
wobei die ähnlichen oder verschiedenen Y ein Stanni-Kettenglied bedeuten mit der Struktur: 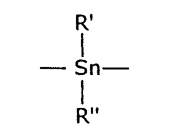 wobei R' und R", die ähnlich oder verschieden sein können, aus Wasserstoff und vorteilhafterweise den Kohlenwasserstoffresten gewählt sind.

3. Verwendung nach einem der Ansprüche 1 und 2, dadurch gekennzeichnet, daß die genannte Oxidation in einer mindestens eine polykondensierbare Verbindung enthaltenden Zusammensetzung durchgeführt wird.

4. Zusammensetzung, dadurch gekennzeichnet, daß sie zur aufeinanderfolgenden oder gleichzeitigen Zugabe enthält:
• mindestens eine Zinnverbindung, die mindestens eine Zinn-Zinn-Bindung und keine Sequenz aus Zinn-Chalkogen-Zinn-Bindungen hat; und
• mindestens eine polykondensierbare Verbindung, die aus den folgenden gewählt ist:
- einem mindestens teilweise maskierten Isocyanat, vorteilhafterweise einem Diisocyanat, vorzugsweise einem Polyisocyanat;
- mindestens eine Verbindung mit SiOH-Gruppen;
- mindestens eine Verbindung mit SiX-Gruppen, wobei X eine hydrolisierbare Gruppe im allgemeinen vom OR-Typ ist.

5. Zusammensetzung nach Anspruch 4, dadurch gekennzeichnet, daß sie enthält:
• ein mindestens teilweise maskiertes (Poly)isocyanat;
• eine Verbindung, die aus den Alkoholen, vorteilhafterweise den Diolen, vorzugsweise den Polyolen, gewählt ist.

6. Zusammensetzung nach Anspruch 4 und 5, dadurch gekennzeichnet, daß sie außerdem enthält:
• ein Oxidationsmittel, das Träger eines oder mehrerer Sauerstoffatome ist und vorteilhafterweise aus denen der Gruppe gewählt ist, die aus den Halogenverbindungen, den Peroxiden, den Sauerstoff enthaltenden Gasen besteht.

7. Zusammensetzung, die insbesondere für die Vernetzung von Farben verwendbar ist, dadurch gekennzeichnet, daß sie zur aufeinanderfolgenden oder gleichzeitigen Zugabe enthält:
• mindestens eine polykondensierbare Verbindung gewählt aus:
⇒ den Alkoholen, vorteilhafterweise den Diolen, vorzugsweise den Polyolen; oder
⇒ den Aminen, vorteilhafterweise den Diaminen, vorzugsweise den Polyaminen; oder
⇒ den Isocyanaten, vorteilhafterweise den Diisocyanaten, vorzugsweise den gegebenenfalls maskierten Polyisocyanaten; oder
⇒ deren Gemischen;
• eine Zinnverbindung, die mindestens eine Zinn-Zinn-Bindung und keine Sequenz von Zinn-Chalkogen-Zinn-Bindungen hat;
und
• ein Oxidationsmittel, das Träger eines oder mehrerer Sauertoffatome ist und vorteilhafterweise aus denen der Gruppe gewählt ist, die aus den Halogenverbindungen, den Peroxiden, den Sauerstoff enthaltenden Gasen besteht;
mit der Maßgabe, daß, wenn die Zinnverbindungen nicht zyklisch sind, sie mindestens eine einfache Bindung vom Typ Zinn-Chalkogen haben, und wenn sie zyklisch sind, sie 5, 6 oder 7 Kettenglieder haben.

8. Zusammensetzung nach einem der Ansprüche 4 bis 7, dadurch gekennzeichnet, daß die genannte Zinnverbindung der Formel (I) entspricht:
R₁- Yₙ - R₄. (I)
in der R₁ und R₄
• ähnlich oder verschieden und aus Wasserstoff oder vorteilhafterweise aus den Kohlenwasserstoffresten gewählt sein können;
oder
• aus beiden einen zweiwertigen Rest oder eine einzige Bindung bilden können, die einen Ring bildet;
wobei n mindestens gleich 2 ist;
wobei die ähnlichen oder verschiedenen Y ein Stanni-Kettenglied bedeuten mit der Struktur: 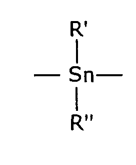 in der R' und R", die ähnlich oder verschieden sein können, aus Wasserstoff und vorteilhafterweise den Kohlenwasserstoffresten gewählt sind.

9. Zusammensetzung nach Anspruch 8, dadurch gekennzeichnet, daß von den beiden Resten R₁ und R₄ mindestens ein Rest ein Chalkogen (vorteilhafterweise ein Sauerstoffatom) darstellt und daß dieses Chalkogen die Bindung trägt, die den genannten Zinnrest bindet.

10. Zusammensetzung nach einem der Ansprüche 8 oder 9, dadurch gekennzeichnet, daß der genannte mindestens einer der Reste R₁ und R₄ eine Verzweigung in alpha-, beta- oder gamma-Stellung des genannten Chalkogen hat, das die Bindung trägt, die den genannten Rest an das Zinn bindet.

11. Zusammensetzung nach einem der Ansprüche 8 bis 10, dadurch gekennzeichnet, daß der Rest R₁ Aryl oder Alkyl einschliesslich Aralkyl ist, und daß die Zahl seiner Kohlenstoffatome höchstens 20, vorzugsweise 10, beträgt.

12. Zusammensetzung nach einem der Ansprüche 8 bis 11, dadurch gekennzeichnet, daß der Rest R₄ Aryl oder Alkyl einschliesslich Aralkyl ist, und daß die Zahl seiner Kohlenstoffatome höchstens 20, vorzugsweise 10, beträgt.

13. Zusammensetzung nach einem der Ansprüche 8 bis 12, dadurch gekennzeichnet, daß der Rest R₁ eine Verzweigung in alpha-, beta- oder gamma-Stellung zu der Bindung hat, die den genannten Rest R₁ an das Zinnatom bindet.

14. Zusammensetzung nach einem der Ansprüche 8 bis 13, dadurch gekennzeichnet, daß der Rest R₄ eine Verzweigung in alpha-, beta- oder gamma-Stellung zu der Bindung hat, die den genannten Rest R₄ an das Zinnatom bindet.

15. Zusammensetzung nach einem der Ansprüche 13 oder 14, dadurch gekennzeichnet, daß die genannte Verzweigung in alpha-, beta- oder gamma-Stellung einem tertiären Rest entspricht.

16. Zusammensetzung nach einem der Ansprüche 8 bis 15, dadurch gekennzeichnet, daß mindestens einer der Reste Rᵢ' eine Zahl an Kohlenstoffatomen von höchstens 20, vorzugsweise 10, hat.

17. Zusammensetzung nach einem der Ansprüche 8 bis 16, dadurch gekennzeichnet, daß mindestens einer der Reste Rᵢ" eine Zahl an Kohlenstoffatomen von höchstens 20, vorzugsweise 10, hat.

18. Zusammensetzung nach einem der Ansprüche 4 bis 17, dadurch gekennzeichnet, daß die genannte Zinnverbindung, die mindestens eine Zinn-Zinn-Bindung und keine Sequenz von Zinn-Chalkogen-Zinn-Bindungen hat, in wäßriger Phase, vorzugsweise in Form einer Emulsion oder einer Dispersion in wäßriger Phase, vorliegt.

19. Zusammensetzung nach einem der Ansprüche 4 bis 18, dadurch gekennzeichnet, daß das Polyisocyanat mindestens ein Dimeres, einen Isocyanatring, eine Allophanatgruppe und/oder mindestens eine Biuretgruppe enthält.

20. Zusammensetzung nach einem der Ansprüche 8 bis 19, dadurch gekennzeichnet, daß sie ein maskiertes (Poly)isocyanat enthält.

21. Zusammensetzung nach einem der Ansprüche 4 bis 20, dadurch gekennzeichnet, daß sie ein mit einem Pyrazol maskiertes (Poly)isocyanat enthält.

22. Zusammensetzung nach einem der Ansprüche 4 bis 21, dadurch gekennzeichnet, daß das Polyisocyanat ein mit einem Oxim, vorzugsweise Methylethylcetoxim, maskiertes Polyisocyanat enthält.

23. Verbindung, die als latenter Katalysator zur Polykondensation verwendbar ist und der Formel (I) entspricht:
R₁-Yₙ-R₄ (I)
in der R₁ und R₄
• ähnlich oder verschieden sind und aus Wasserstoff oder vorteilhafterweise aus den Kohlenwasserstoffresten gewählt sind, wobei mindestens einer der Reste R₁ oder R₄ eine über ein Chalkogen, vorzugsweise ein Sauerstoffatom, mit dem Zinn verbundene Gruppe ist;
oder
• an beiden einen zweiwertigen Rest oder eine einzige Bindung bilden können, die einen Ring mit 5, 6 oder 7 Kettengliedern bildet;
wobei n mindestens gleich 2 ist;
wobei die ähnlichen oder verschiedenen Y ein Stanni-Kettenglied bedeuten mit der Struktur: 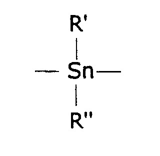 in der R' und R", die ähnlich oder verschieden sein können, aus Wasserstoff und vorteilhafterweise den Kohlenwasserstoffresten gewählt sind, und daß der genannte mindestens einer der Reste R₁ und R₄ eine Verzweigung in alpha-, beta- oder gamma-Stellung des genannten Chalkogens hat, das die Bindung trägt, die den genannten Rest an das Zinn bindet.

24. Verbindung nach Anspruch 23, dadurch gekennzeichnet, daß mindestens einer der Reste Rᵢ' eine Zahl an Kohlenstoffatomen von höchstens 20, vorzugsweise 10, hat.

25. Verbindung nach Anspruch 23 oder 24, dadurch gekennzeichnet, daß der Rest R₁ Aryl oder Alkyl einschliesslich Aralkyl ist, und daß die Zahl dieser Kohlenstoffatome höchstens 20, vorzugsweise 10, ist.

26. Verbindung nach Anspruch 23 oder 24, dadurch gekennzeichnet, daß der Rest R₁ Aryl oder Alkyl einschliesslich Aralkyl ist, und daß die Zahl dieser Kohlenstoffatome höchstens 20, vorzugsweise 10, ist.

27. Verbindung nach einem der Ansprüche 23 bis 26, dadurch gekennzeichnet, daß der Rest R₁ eine Verzweigung in alpha-, beta- oder gamma-Stellung zu der Bindung hat, die den genannten Rest R an das Zinn bindet.

28. Verbindung nach einem der Ansprüche 23 bis 27, dadurch gekennzeichnet, daß der Rest R₄ eine Verzweigung in alpha-, beta- oder gamma-Stellung zu der Bindung hat, die den genannten Rest R an das Zinn bindet.

29. Verbindung nach Anspruch 23, 24, 27 oder 28, dadurch gekennzeichnet, daß die genannte Verzweigung in alpha-, beta- oder gamma-Stellung einem tertiären Rest entspricht.

30. Verbindung nach Anspruch 23 oder 24, dadurch gekennzeichnet, daß R₁ und/oder R₄ alkoxiliert sind.

31. Verbindung nach einem der Ansprüche 23 bis 25, dadurch gekennzeichnet, daß R₁ und/oder R₄ acyloxiliert sind.

32. Verwendung als Katalysator zur Polykondensation von Verbindungen der Formel (II):
R₁-(Q)ₙ-R₄. (II)
in der die Reste denselben Wert haben, wie in der zuvor genannten Formel (I);
wobei n größer oder gleich 2 ist; und
in der Q ein zweiwertiger Rest der Struktur -Z-Y- ist, wobei Y dieselbe Bedeutung wie in Formel (I) hat und wobei Z entweder ein Sauerstoffatom oder nur eine Bindung mit dem genannten Kettenglied oder mit R₁ bedeutet, mit der Maßgabe, daß mindestens eines der Z Sauerstoff ist.

33. Verwendung als Katalysator zur Polykondensation von Isocyanaten/einem Isocyanat und/oder zur Freisetzung von maskiertem(n) Isocyanat(en)/einem maskierten Isocyanat in Verbindungen der Formel (III):
R₅-Sn(R₆) = O (III)
in der R₅ und R₆ aus denselben Resten wie R', R" und R₁ und R₄ gewählt sind.

34. Verwendung nach Anspruch 34 oder 35, in der die maskierten Isocyanate mit Maskierungsmitteln maskiert sind, die zur Bildung von Sequenzen des Harnstofftyps führen.
